# EUROPEAN PATENT APPLICATION

(11) **EP 4 578 598 A1**
(43) Date of publication of application: **02.07.2025**
(21) Application number: 24861315.0
(22) Date of filing: 03.09.2024
(51) Int. Cl.: B24B 41/06, F16C 19/04, F16C 33/64

(54) **DEVICE AND METHOD FOR PROCESSING RING-SHAPED MEMBER, METHOD FOR MANUFACTURING BEARING, METHOD FOR MANUFACTURING MACHINE DEVICE, AND METHOD FOR MANUFACTURING VEHICLE**

(30) Priority: 16.11.2023 JP 2023195436
(71) Applicant: NSK Ltd., Tokyo 141-8560 (JP)
(72) Inventor: FUKUTOMI, Kento, Fujisawa, Kanagawa 2518501 (JP); MOURI, Eiji, Fujisawa, Kanagawa 2518501 (JP)
(74) Representative: Grünecker Patent- und Rechtsanwälte PartG mbB
(86) International application number: PCT/JP2024/031579
(87) International publication number: WO 2025/105019

(57) **Abstract**

A device includes a rotation drive mechanism (2) that rotates a metal ring-shaped member (5) in a circumferential direction around a reference axis, a grinding mechanism (40) having a grinding stone (3) pressed against an outer circumferential surface of the ring-shaped member (5), and a support mechanism (4) that supports the ring-shaped member (5). The support mechanism (4) has a support portion (42) that is brought into contact with an inner circumferential surface of the ring-shaped member (5) in at least one circumferential range around the reference axis.

## Description

### TECHNICAL FIELD

The present disclosure relates to a processing device for processing an outer circumferential surface of a metal ring-shaped member.

Priority is claimed on Japanese Patent Application No. 2023-195436, filed November 16, 2023, the content of which is incorporated herein by reference.

### BACKGROUND ART

An outer circumferential surface of a metal ring-shaped member, such as an inner raceway of an inner ring and an outer circumferential surface of an outer ring, which form a radial rolling bearing, is subjected to grinding in order to improve surface precision and surface roughness.

FIG. 13 shows a grinding device 100 in the related art, which is described in Patent Document 1 (Japanese Patent Application, Publication No. 2004-195651). The grinding device 100 includes a backing plate 101 that is rotatable around its own central axis, a grinding wheel 102 that has a central axis disposed parallel to the central axis of the backing plate 101 and is rotatable around the central axis, and two shoes 104 for radially positioning a metal ring-shaped member 103, which is a workpiece (processing target).

When an outer circumferential surface of the ring-shaped member 103 is ground, an axial end face of the ring-shaped member 103 is magnetically attached to a tip surface of the backing plate 101, and tip portions (seat surfaces) of the two shoes 104 are brought into sliding contact with the outer circumferential surface of the ring-shaped member 103, and thus the ring-shaped member 103 is positioned radially.

In this state, the backing plate 101 is rotated to rotate the ring-shaped member 103, while a grinding surface 105 that is an outer circumferential surface of the rotating grinding wheel 102 is pressed against a portion of the outer circumferential surface of the ring-shaped member 103, which is circumferentially offset from portions with which the tip portions of the two shoes 104 are brought into sliding contact, and thus the outer circumferential surface of the ring-shaped member 103 is ground.

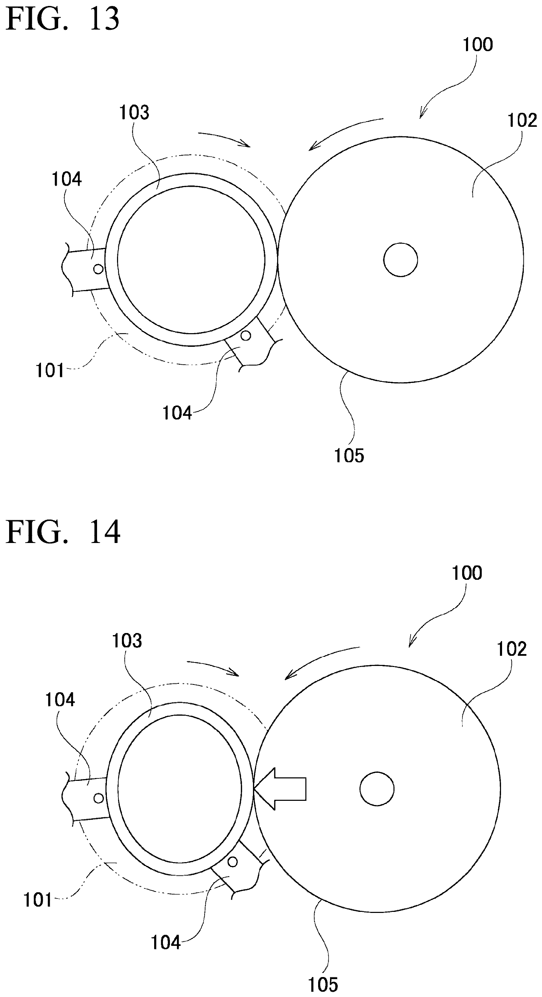

In the grinding device 100 in the related art described in Patent Document 1, when the outer circumferential surface of the ring-shaped member 103 is ground, the grinding surface 105 of the grinding wheel 102 is pressed against the outer circumferential surface of the ring-shaped member 103. For that reason, as shown in an exaggerated manner in FIG. 14, the ring-shaped member 103 elastically deforms into an elliptical shape whose minor axis direction is set to a pressing direction of the grinding surface 105 of the grinding wheel 102. In particular, raceways of rolling bearings designed in recent years to meet the demands for reduction in weight and size are thin-walled and have very low rigidity, and thus such elastic deformation is likely to occur when an outer circumferential surface of a raceway as a ring-shaped member is ground.

As described above, when the ring-shaped member 103 elastically deforms into an elliptical shape, that is, when the outer circumferential surface of the ring-shaped member 103 elastically deforms to escape from the grinding surface 105 of the grinding wheel 102, an amount of grinding of the outer circumferential surface of the ring-shaped member 103 and an amount of cutting of the grinding wheel 102 do not match, and it may be difficult to finish the outer circumferential surface of the ring-shaped member 103 to a desired diameter dimension.

Patent Document 2 (Japanese Patent Application, Publication No. 2019-42864) describes a grinding device in which, when portions of an outer circumferential surface of a ring-shaped member that are circumferentially separated from a portion ground by a grinding wheel are supported by two shoes and the outer circumferential surface of the ring-shaped member is ground by the grinding wheel, a moment is applied to the ring-shaped member in a direction pressing the outer circumferential surface of the ring-shaped member toward a first shoe of the two shoes, which is on the closest side to the grinding wheel.

Specifically, a second shoe of the two shoes, which is on the farthest side from the grinding wheel, is supported to be able to swing about a swing axis located farther from the first shoe than a circumferential center of the second shoe. For this reason, as the grinding wheel is pressed against the outer circumferential surface of the ring-shaped member, a reaction force applied from the second shoe to the ring-shaped member is greater at a portion farther from the first shoe in a contact portion between the ring-shaped member and the second shoe than at a portion closer to the first shoe. As a result, a moment is applied to the ring-shaped member in a direction pressing the outer circumferential surface against the first shoe.

According to the grinding device described in Patent Document 2, by pressing a grinding surface of the grinding wheel against the outer circumferential surface of the ring-shaped member, even when the ring-shaped member elastically deforms into an elliptical shape, a contact pressure between the first shoe and the outer circumferential surface of the ring-shaped member is effectively prevented from decreasing, and a posture of the ring-shaped member during grinding can be stabilized.

### Citation List

### Patent Document

Patent Document 1: Japanese Patent Application, Publication No. 2004-195651
Patent Document 2: Japanese Patent Application, Publication No. 2019-42864

### SUMMARY OF INVENTION

### Technical Problem

In the grinding device described in Patent Document 2, since the outer circumferential surface of the ring-shaped member is supported by the two shoes, it is difficult to prevent the ring-shaped member from elastically deforming into an elliptical shape due to a pressing force of the grinding wheel.

For this reason, an amount of grinding of the outer circumferential surface of the ring-shaped member and an amount of cutting of the grinding wheel do not match, and it may be difficult to finish the outer circumferential surface of the ring-shaped member to a desired diameter dimension.

An object of an aspect of the present invention is to provide a processing device and a processing method for a ring-shaped member, which are advantageous in improving quality.

### Solution to Problem

In one aspect of the present invention, a processing device for a ring-shaped member includes: a rotation drive mechanism configured to rotate a metal ring-shaped member in a circumferential direction around a reference axis; a grinding mechanism including a grinding stone that is pressed against an outer circumferential surface of the ring-shaped member; and a support mechanism that includes a support portion brought into contact with an inner circumferential surface of the ring-shaped member in at least one circumferential range around the reference axis and supports the ring-shaped member.

In one aspect of the present invention, a processing method for a ring-shaped member includes: a step of rotating a metal ring-shaped member in a circumferential direction around a reference axis; and a step of pressing a grinding stone against an outer circumferential surface of the ring-shaped member, the step including a step of supporting the ring-shaped member by bringing a support portion into contact with an inner circumferential surface of the ring-shaped member in at least one circumferential range around the reference axis.

In one aspect of the present invention, a method for manufacturing a bearing including a ring-shaped member includes a step of processing an outer circumferential surface of the ring-shaped member using the processing method for a ring-shaped member of the above aspect.

In one aspect of the present invention, a method for manufacturing a mechanical device includes a step of manufacturing a mechanical component using the method for manufacturing a bearing of the above aspect, and a step of attaching the mechanical component to a device body.

In one aspect of the present invention, a method for manufacturing a vehicle includes a step of manufacturing a bearing using the method for manufacturing a bearing of the above aspect, and a step of attaching the bearing to a vehicle body. Advantageous Effects of Invention

According to the aspects of the present invention, the processing device and the processing method for a ring-shaped member that are advantageous in improving quality are provided.

### BRIEF DESCRIPTION OF DRAWINGS

[FIG. 1] FIG. 1 is a side view schematically showing a processing device for a ring-shaped member according to a first embodiment.
[FIG. 2] FIG. 2 is a diagram schematically showing a support structure.
[FIG. 3] FIG. 3 is a cross-sectional view of a mechanical device including a rolling bearing.
[FIG. 4] FIG. 4 is a partially cut-away perspective view of the rolling bearing.
[FIG. 5] FIG. 5 is a schematic cross-sectional view showing a bearing having a coating film.
[FIG. 6] FIG. 6 is a diagram schematically showing an example of a support portion (support member) set for an outer ring.
[FIG. 7] FIG. 7 is a side view schematically showing a processing device for a ring-shaped member according to a second embodiment.
[FIG. 8] FIG. 8 is a side view schematically showing a processing device for a ring-shaped member according to a third embodiment.
[FIG. 9] FIG. 9 is a side view schematically showing a processing device for a ring-shaped member according to a fourth embodiment.
[FIG. 10] FIG. 10 is a side view schematically showing a processing device for a ring-shaped member according to a fifth embodiment.
[FIG. 11] FIG. 11 is a side view schematically showing a processing device for a ring-shaped member according to a sixth embodiment.
[FIG. 12] FIG. 12 is a side view schematically showing a processing device for a ring-shaped member according to a seventh embodiment.
[FIG. 13] FIG. 13 is a side view schematically showing an example of a structure of a processing device for a ring-shaped member in the related art.
[FIG. 14] FIG. 14 is a diagram showing in an exaggerated manner a state in which the ring-shaped member is elastically deformed into an elliptical shape.

### DESCRIPTION OF EMBODIMENTS

### [First embodiment]

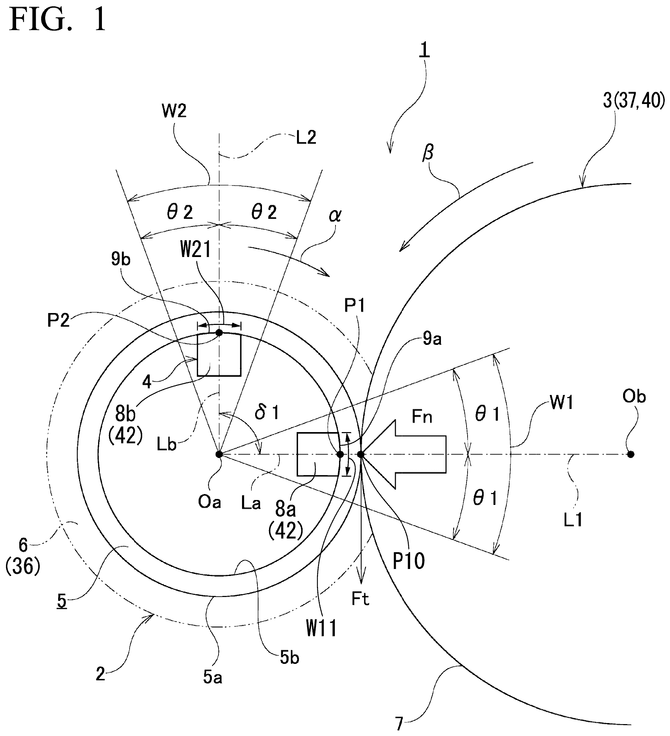

A first embodiment will be described with reference to FIGS. 1 to 6.

In the present embodiment, a processing device 1 for a ring-shaped member includes a rotation drive mechanism 2, a grinding mechanism 40, and a support mechanism 4. In one example, the processing device 1 is a grinding device for performing grinding. In another example, the processing device 1 can be a super-finishing device for performing super-finishing.

The rotation drive mechanism 2 can rotate a metal ring-shaped member 5 serving as a workpiece in a predetermined direction α (clockwise in FIG. 1). The rotation drive mechanism 2 rotates the ring-shaped member 5 in a circumferential direction around a reference axis (Oa).

In one example, the rotation drive mechanism 2 has a holding member 6 for holding the ring-shaped member 5, and a drive unit 36. For example, the rotation drive mechanism 2 has a backing plate (holding member or plate member) 6 that rotates the ring-shaped member 5 while magnetically attaching an axial end face of the ring-shaped member 5 thereto. The backing plate 6 holds the ring-shaped member 5 by magnetic attachment. The drive unit 36 rotates the ring-shaped member 5 via the backing plate (holding member) 6. In another example, the holding member 6 can have a structure different from that of the backing plate.

The backing plate 6 is configured to enable rotation about a central axis (reference axis or rotation axis) Oa. In one example, the central axis Oa of the backing plate 6 is disposed in a horizontal direction (front to back direction of the sheet surface of FIG. 1). In another example, the central axis of the backing plate can be disposed in a direction different from the horizontal direction.

For example, the backing plate 6 has a tip surface (an end surface or holding surface facing the front side of the sheet surface of FIG. 1) that includes a flat surface orthogonal to the central axis Oa. The backing plate 6 can support the ring-shaped member 5 coaxially with itself by magnetically attaching the axial end face (end face or axial end face facing the back side of the sheet surface of FIG. 1) of the ring-shaped member 5 to the tip surface.

The grinding mechanism 40 has a grinding wheel stone 3 and a drive unit 37. The grinding wheel 3 can be pressed against an outer circumferential surface 5a of the ring-shaped member 5 to perform grinding on the outer circumferential surface 5a of the ring-shaped member 5.

In one example, the grinding stone 3 is rotated by the drive unit 37. The grinding wheel 3 has a grinding surface 7 on its outer circumferential surface, and is configured of a rotating grinding wheel that can be rotated around a central axis (rotation axis) Ob disposed parallel to the central axis Oa of the backing plate 6. The grinding surface 7 has a generatrix shape that matches a generatrix shape of the outer circumferential surface 5a of the ring-shaped member 5, which is a surface to be ground. For example, the grinding wheel 3 can be rotated around the central axis Ob in an opposite direction β (counterclockwise in FIG. 1) to the predetermined direction α so that a circumferential speed of its outer circumferential surface (grinding surface 7) is faster than a circumferential speed of the outer circumferential surface 5a of the ring-shaped member 5. In another example, a rotation direction and a rotation speed of the grinding wheel 3 and a rotation direction and a rotation speed of the ring-shaped member 5 can be set arbitrarily.

The grinding wheel 3 can move its central axis Ob toward or away from the central axis Oa of the backing plate 6, that is, can move it in left and right directions in FIG. 1. That is, the grinding surface 7 of the grinding wheel 3 can be pressed against the outer circumferential surface 5a of the ring-shaped member 5 supported by the backing plate 6.

Alternatively, the grinding mechanism 40 can be configured so that the grinding wheel 3 does not substantially rotate. That is, when processing such as grinding is performed on the outer circumferential surface 5a of the ring-shaped member 5, it is possible to rotate only the ring-shaped member 5 without rotating the grinding wheel. If the processing device is a super-finishing device, when super-finishing is performed on the outer circumferential surface 5a of the ring-shaped member 5, it is possible to rotate only the ring-shaped member 5 and swing the grinding wheel without rotating it.

The support mechanism 4 has a support portion 42 brought into contact with an inner circumferential surface 5b of the ring-shaped member 5 in at least one circumferential range (W11 or W21) around the reference axis (Oa). The support portion 42 has radially inner support members 8a and 8b that come into contact with the inner circumferential surface 5b of the ring-shaped member 5 and support the ring-shaped member 5 in a radial direction thereof. Additionally, the support portion 42 can have radially outer support members that come into contact with the outer circumferential surface 5a of the ring-shaped member 5 and support the ring-shaped member 5 in the radial direction. In the example of FIG. 1, the support portion 42 has radially inner support members 8a and 8b and does not have the radially outer support members.

In the example of FIG. 1, the support portion 42 has two radially inner support members 8a and 8b. In another example, the support portion 42 can have one or three or more radially inner support members.

In the example of FIG. 1, the support members 8a and 8b are disposed to be separated from each other in the circumferential direction. The support members 8a and 8b are brought into contact with the inner circumferential surface 5b of the ring-shaped member 5 and have seat surfaces (tip surfaces, support surfaces, or contact surfaces) 9a and 9b that support the ring-shaped member 5. At least a part of the seat surfaces 9a and 9b has a curved shape that corresponds to a curved shape of the inner circumferential surface 5b of the ring-shaped member 5. In the grinding, when the ring-shaped member 5 rotates, the support portion 42 (support members 8a and 8b) does not move substantially in the circumferential direction, and circumferential positions of the support members 8a and 8b (circumferential positions around the reference axis Oa) are constant. The inner circumferential surface 5b of the ring-shaped member 5 moves in the circumferential direction relative to the support portion 42 (the seat surfaces 9a and 9b of the support members 8a and 8b). The seat surfaces 9a and 9b are in sliding contact with the inner circumferential surface 5b of the ring-shaped member 5.

For example, the two radially inner support members 8a and 8b each have a shoe that comes into sliding contact with the inner circumferential surface 5b of the ring-shaped member 5. The shoes can be made of a hard material with excellent wear resistance, such as cemented carbide, ceramics, or diamond.

In the example of FIG. 1, the two radially inner support members 8a and 8b are supported by and fixed to a support base (frame or housing) (not shown) forming the support mechanism 4.

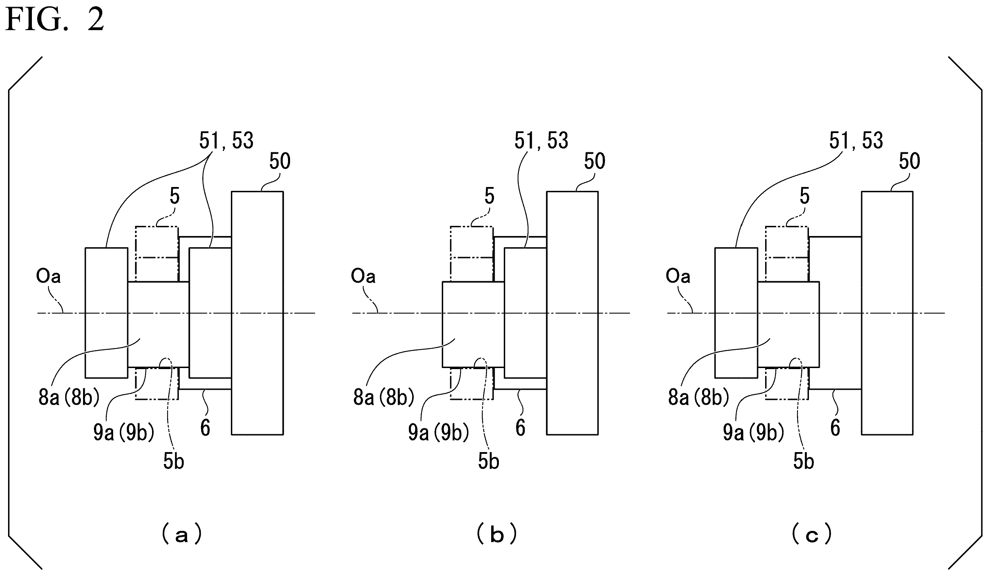

In the example of FIG. 2, the holding member (backing plate) 6 for holding the ring-shaped member 5 is attached to a frame 50. Also, the support members 8a and 8b brought into contact with the inner circumferential surface 5b of the ring-shaped member 5 are attached to the frame 50. That is, the holding member 6 and the support member 8a (8b) are attached to the common frame 50. The holding member 6 is supported by the frame 50 to be rotatable around the reference axis Oa. The support member 8a (8b) is supported by the frame 50 via an adjustment mechanism 51. The adjustment mechanism 51 can adjust a position (position of the seat surface 9a (9b) in a plane intersecting the reference axis Oa) and/or a posture of the support member 8a (8b) relative to the reference axis Oa. For example, the adjustment mechanism 51 has a linear motion mechanism and/or an eccentric mechanism. The holding member 6 and the support member 8a (8b) are positioned with respect to the common reference axis Oa. Such a configuration is advantageous for simplifying adjustment work and improving positioning accuracy.

In the example of FIG. 2, both axial end portions (a first axial end portion and a second axial end portion on a side opposite to the first axial end portion) of the support member 8a (8b) are supported by the frame 50 (part (a) of FIG. 2). The double-sided support structure is advantageous for ensuring high rigidity. The support member 8a (8b) is detachable from the frame 50. In another example, one axial end portion of the support member 8a (8b) is supported by the frame 50 (parts (b) and (c) of FIG. 2). The single-sided support structure is advantageous for facilitating attachment and detachment work of the ring-shaped member 5. For example, in the single-sided support structure, the support member 8a (8b) is supported on the same side as the holding member 6 (part (b) of FIG. 2). This structure is advantageous for space saving. Alternatively, for example, the support member 8a (8b) is supported on a side opposite to the side on which the holding member 6 is supported. This structure is advantageous for facilitating adjustment work of the support member 8a (8b).

In one example, a plurality of support members 8a and 8b are held in one housing 53 provided with the adjustment mechanism 51. The housing 53 holding the plurality of support members 8a and 8b is attached to the frame 50. The plurality of support members 8a and 8b are simultaneously set to the frame 50 or simultaneously removed via the housing 53. Additionally, the housing 53 can be configured to be separable in an axial direction thereof. For example, the housing 53 has a first portion and a second portion, and the first portion and the second portion can be combined with each other in the axial direction. The first portion of the housing 53 supports the first axial end portion of the support member 8a (8b), and the second portion of the housing 53 supports the second axial end portion of the support member 8a (8b). The split structure is advantageous for ensuring high rigidity and facilitating attachment and detachment work.

Returning to FIG. 1, the radially inner support members 8a and 8b respectively have the tip surfaces (seat surfaces, support surfaces, or contact surfaces) 9a and 9b that come into sliding contact with the inner circumferential surface 5b of the ring-shaped member 5. In one example, each of the tip surfaces 9a and 9b is configured by a partial cylindrical surface that is curved along the inner circumferential surface 5b of the ring-shaped member 5. Also, a radius of curvature of each of the tip surfaces 9a and 9b is substantially the same as a radius of curvature of the inner circumferential surface 5b of the ring-shaped member 5. That is, each of the tip surfaces 9a and 9b is in surface contact with the inner circumferential surface 5b of the ring-shaped member 5. In another example, the tip portion (seat surface) of the radially inner support member 8a (8b) serving as the shoe, can be in line contact or point contact with the inner circumferential surface 5b of the ring-shaped member 5.

Circumferential positions of the seat surfaces 9a and 9b of the support members 8a and 8b are set in accordance with a grinding position, or the like. In the example of FIG. 1, the circumferential range (W11) that is a support range of the first support member 8a includes a circumferential position corresponding to a contact position (back side position) between the grinding wheel 3 and the ring-shaped member 5.

A support position (P1) of the first support member 8a on the inner circumferential surface 5b and a contact position (P10) between the grinding wheel 3 and the ring-shaped member 5 on the outer circumferential surface 5a are disposed on or near a straight line (L1) extending in the radial direction of the ring-shaped member 5. In addition, the support position (P1) and the contact position (P10) are substantially in a front-back positional relationship with a wall of the ring-shaped member 5 interposed therebetween. The first support member 8a receives, on the inner circumferential surface 5b on its inner side, a radially inward force from the grinding wheel 3 acting on the outer circumferential surface 5a of the ring-shaped member 5. The ring-shaped member 5 is supported by the support portion 42 at or near a circumferential position substantially the same as a circumferential position at which a pressing force of the grinding wheel 3 acts. A change in the shape of the ring-shaped member 5 during grinding is inhibited.

Further, in the example of FIG. 1, the circumferential range (W21) that is a support range of the second support member 8b includes a circumferential position located on a vertical line passing through the reference axis (Oa) and above the reference axis (Oa). **In** another example, the plurality of support members 8a and 8b can be disposed in other ways. Also, in the support portion 42, only one support member can be in contact with the inner circumferential surface 5b of the ring-shaped member 5.

Circumferential center positions P1 and P2 of the respective portions, which come into contact with the inner circumferential surface 5b of the ring-shaped member 5, of the two radially inner support members 8a and 8b adjacent to each other in the circumferential direction of the ring-shaped member 5 can be disposed apart from each other by δ1 when expressed as a central angle centered on the central axis Oa of the ring-shaped member 5. In other words, the angle between one imaginary straight line La connecting the circumferential center position P1 of the tip surface 9a, which is a portion of one radially inner support member 8a that comes into contact with the inner circumferential surface 5b of the ring-shaped member 5, and the central axis Oa of the ring-shaped member 5 and the other imaginary straight line Lb connecting the circumferential center position P2 of the tip surface 9b, which is a portion of the other radially inner support member 8b that comes into contact with the inner circumferential surface 5b of the ring-shaped member 5, and the central axis Oa of the ring-shaped member 5 can be set to δ1. The radially inner support member 8a has the first support range (first contact range) W11, and the radially inner support member 8a has the second support range (second contact range) W21. The angle (central angle around the reference axis) δ1 between the circumferential center position of the first support range W11 and the circumferential center position of the second support range W21 is appropriately set. For example, δ1 can be 20 degrees or more and 160 degrees or less, 75 degrees or more and 105 degrees or less, or 75 degrees or more and 90 degrees or less. In the example of FIG. 1, δ1 is 90 degrees. The above numerical values are examples, and the present disclosure is not limited thereto.

In one example, a circumferential position and a shape of the one radially inner support member 8a are regulated so that at least a part of the tip surface 9a, which is the portion of the one radially inner support member 8a that comes into contact with the inner circumferential surface 5b of the ring-shaped member 5, is present in a first circumferential range W1 in which the central angle centered on the central axis Oa of the ring-shaped member 5 is in the range of ±θ1 with a first imaginary straight line L1 connecting the central axis Oa of the ring-shaped member 5 and the central axis Ob of the grinding wheel 3 as a reference when viewed in the axial direction of the ring-shaped member 5. The support member 8a has a region (seat surface (support surface or contact surface) 9a) that can come into contact with the inner circumferential surface 5b of the ring-shaped member 5, and the circumferential range (central angle) W1 corresponding to that region (a circumferential length of the seat surface 9a) is appropriately set. For example, θ1 is 45 degrees, 22.5 degrees, or 15 degrees. For example, θ1 can be set to approximately 60, 55, 50, 45, 40, 35, 30, 25, 20, 15, 10, or 5 degrees. The above numerical values are merely examples, and the present disclosure is not limited thereto.

In one example, the circumferential position of the one radially inner support member 8a and the shape of the tip surface 9a are regulated so that the entire portion of the tip surface 9a of the one radially inner support member 8a that comes into contact with the inner circumferential surface 5b of the ring-shaped member 5 is present in the first circumferential range W1.

For example, the angle between the first imaginary straight line L1 and the one imaginary straight line La can be -22.5 degrees to +22.5 degrees, or -15 degrees to +15 degrees when the rotation direction α of the ring-shaped member 5 is defined as positive. In the example of FIG. 1, the angle between the first imaginary straight line L1 and the one imaginary straight line La is 0 degrees, and the circumferential center position P1 of the tip surface 9a of the one radially inner support member 8a is located on the first imaginary straight line L1.

In another example, only a part of the portion at which the radially inner support member 8a comes into contact with the inner circumferential surface 5b of the ring-shaped member 5 can be present in the first circumferential range W1. And/or, the circumferential center position P1 can be located at a circumferential position different from the first imaginary straight line L1.

In one example, the circumferential position and the shape of the other radially inner support member 8b are regulated so that at least a part of the tip surface 9b, which is a portion of the other radially inner support member 8b that comes into contact with the inner circumferential surface 5b of the ring-shaped member 5, is present in a second circumferential range W2 in which the central angle centered on the central axis Oa of the ring-shaped member 5 is in the range of ±θ2 with the second imaginary straight line L2 extending from the central axis Oa of the ring-shaped member 5 in a direction shifted by 90 degrees in the opposite direction β to the rotation direction α of the ring-shaped member 5 with respect to the first imaginary straight line L1 as a reference when viewed in the axial direction of the ring-shaped member 5. The support member 8b has a region (seat surface (support surface or contact surface) 9b) that can come into contact with the inner circumferential surface 5b of the ring-shaped member 5, and the circumferential range (central angle) W2 corresponding to that region (a circumferential length of the seat surface 9b) is appropriately set. For example, θ2 is 45 degrees or 22.5 degrees. For example, θ2 can be set to approximately 60, 55, 50, 45, 40, 35, 30, 25, 20, 15, 10, or 5 degrees. The above numerical values are merely examples, and the present disclosure is not limited thereto.

In another example, in a case in which the grinding wheel 3 rotates in the same direction as the rotation direction of the ring-shaped member when the outer circumferential surface of the ring-shaped member 5 is ground, the second imaginary straight line L2 can be a straight line extending from the central axis of the ring-shaped member in a direction shifted by 90 degrees from the first imaginary straight line L1 in the rotation direction of the ring-shaped member 5.

In one example, the circumferential position and the shape of the tip surface 9b of the other radially inner support member 8b are regulated so that the entire portion of the tip surface 9b of the other radially inner support member 8b that comes into contact with the inner circumferential surface 5b of the ring-shaped member 5 is present in the second circumferential range W2.

For example, the angle between the second imaginary straight line L2 and the other imaginary straight line Lb can be -45 degrees to +45 degrees, 0 degrees to +45 degrees, or 0 degrees to +15 degrees when the rotation direction α of the ring-shaped member 5 is defined as positive. In the example of FIG. 1, the angle between the second imaginary straight line L2 and the other imaginary straight line Lb is 0 degrees, and the circumferential center position P2 of the tip surface 9a of the other radially inner support member 8a is located on the second imaginary straight line L2.

In another example, only a part of the portion at which the radially inner support member 8b comes into contact with the inner circumferential surface 5b of the ring-shaped member 5 can be present in the second circumferential range W2. And/or, the circumferential center position P2 can be located at a circumferential position different from the second imaginary straight line L2.

In the first embodiment, when the outer circumferential surface 5a of the ring-shaped member 5 is ground using the processing device 1, the axial end face of the ring-shaped member 5 is held by the backing plate 6 by magnetic attachment. The backing plate 6 rotates in the predetermined direction α. The ring-shaped member 5 rotates in the predetermined direction α around the central axis Oa. As shown in FIG. 1, the tip surfaces 9a and 9b of the two radially inner support members 8a and 8b come into sliding contact with the inner circumferential surface 5b of the ring-shaped member 5. The ring-shaped member 5 is supported in the radial direction by the two radially inner support members 8a and 8b.

The grinding wheel 3 rotates in the opposite direction β to the predetermined direction α around the central axis Ob. For example, the circumferential speed of the grinding surface 7 is faster than the circumferential speed of the outer circumferential surface 5a of the ring-shaped member 5. The grinding surface 7 is pressed against the outer circumferential surface 5a of the ring-shaped member 5, and the outer circumferential surface 5a is ground.

If necessary, a specified fluid such as a coolant is supplied during grinding. For example, the radially inner support members (two radially inner support members 8a and 8b) forming the support mechanism 4 can be provided with a coolant supply hole having an opening portion. The coolant discharged from the opening portion of the coolant supply hole is supplied to the contact portion between the outer circumferential surface 5a of the ring-shaped member 5 and the grinding surface 7 of the grinding wheel 3.

In the present embodiment, when the outer circumferential surface 5a of the ring-shaped member 5 is ground, the radially inner support members (two radially inner support members 8a and 8b) of the support mechanism 4 support the inner circumferential surface 5b of the ring-shaped member 5. For that reason, a change in the shape of the ring-shaped member 5 during grinding is inhibited. The rigidity against the processing force applied to the outer circumferential surface 5a of the ring-shaped member 5 from the grinding surface 7 of the grinding wheel 3 is improved as compared to the related art.

In the present embodiment, when the outer circumferential surface 5a of the ring-shaped member 5 is ground, elastic deformation thereof into an elliptical shape resulting in escaping from the grinding surface 7 of the grinding wheel 3 is suppressed as compared to the related art in which the outer circumferential surface 5a of the ring-shaped member 5 is ground while the outer circumferential surface 5a is supported by shoes. For example, by roughly matching an amount of grinding of the outer circumferential surface 5a of the ring-shaped member 5 and an amount of cutting of the grinding wheel 3, it becomes easy to finish the outer circumferential surface 5a of the ring-shaped member 5 to a desired diameter dimension. In addition, it becomes easy to make a radial thickness of the ring-shaped member 5 nearly uniform in the circumferential direction.

In one example, the circumferential center positions P1 and P2 of the respective portions, which come into contact with the inner circumferential surface 5b of the ring-shaped member 5, of the two radially inner support members 8a and 8b adjacent to each other in the circumferential direction of the ring-shaped member 5 are disposed apart from each other by δ1 when expressed as the central angle centered on the central axis Oa of the ring-shaped member 5. The rigidity of the ring-shaped member 5 against the elastic deformation in the radial direction due to the processing force applied from the grinding surface 7 of the grinding wheel 3 to the outer circumferential surface 5a of the ring-shaped member 5 can be efficiently improved.

In one example, at least a part of the portions of the radially inner support members (two radially inner support members 8a and 8b) forming the support mechanism 4 that come into contact with the inner circumferential surface 5b of the ring-shaped member 5 is present in the first circumferential range W1. Specifically, at least a part (in the present example, the whole) of the tip surface 9a of the one radially inner support member 8a is present in the first circumferential range W1. For this reason, in the contact portion between the outer circumferential surface 5a of the ring-shaped member 5 and the grinding surface 7 of the grinding wheel 3, a normal processing force (the pressing force of the grinding wheel 3 acting leftward in FIG. 1) Fn applied to the outer circumferential surface 5a of the ring-shaped member 5 can be efficiently supported by the tip surface 9a of the one radially inner support member 8a present in the first circumferential range W1. Accordingly, from this viewpoint as well, the elastic deformation of the ring-shaped member 5 into an elliptical shape can be effectively prevented.

In one example, at least a part of the portions at which the radially inner support members (two radially inner support members 8a and 8b) forming the support mechanism 4 come into contact with the inner circumferential surface 5b of the ring-shaped member 5 is present in the second circumferential range W2. Specifically, at least a part (in the present example, the whole) of the tip surface 9b of the other radially inner support member 8b is present in the second circumferential range W2. For this reason, in the contact portion between the outer circumferential surface 5a of the ring-shaped member 5 and the grinding surface 7 of the grinding wheel 3, a tangential processing force (grinding force acting downward in FIG. 1) Ft applied to the outer circumferential surface 5a of the ring-shaped member 5 can be efficiently supported by the tip surface 9b of the other radially inner support member 8b present in the second circumferential range W2. Accordingly, the ring-shaped member 5 can be effectively prevented from being displaced in the tangential direction (downward direction in FIG. 1), and the grinding of the outer circumferential surface 5a of the ring-shaped member 5 can be stably performed.

In the present embodiment, the inner circumferential surface 5b of the ring-shaped member 5 is supported by the radially inner support members (two radially inner support members 8a and 8b) forming the support mechanism 4, and the outer circumferential surface 5a of the ring-shaped member 5 is ground. For that reason, the outer circumferential surface of the ring-shaped member 5 is prevented from being scratched (shoe scratches). An appearance of the ring-shaped member 5 is maintained in good condition, or a coating applied to the outer circumferential surface 5a of the ring-shaped member 5 is prevented from being damaged.

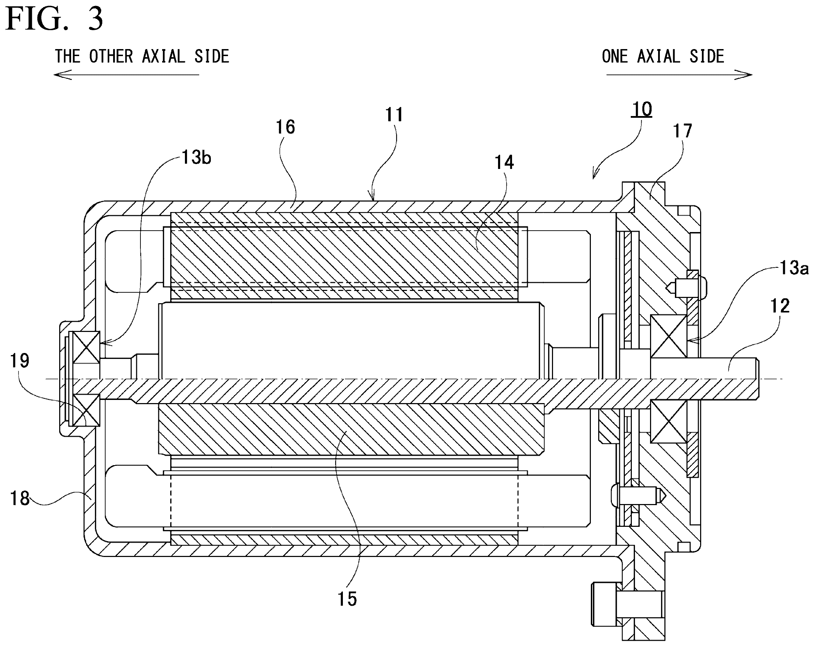

FIG. 3 shows an electric motor 10 provided with a bearing including a ring-shaped member processed by the above grinding method.

The electric motor 10 includes a housing 11, an output shaft 12, two bearings 13a and 13b, a motor stator 14, and a motor rotor 15.

Also, for the electric motor 10, one axial side is the right side in FIG. 3, and the other axial side is the left side in FIG. 3.

The housing 11 has a bottomed cylindrical housing body 16, only one axial end portion of which is open, and a hollow circular plate-shaped lid body 17 attached to the open end portion on the one axial side of the housing body 16.

The output shaft 12 is disposed coaxially with the housing 11 inside the housing 11. One axial end portion of the output shaft 12 protrudes to the outside of the housing 11 through a radial inside of the lid body 17.

The two bearings 13a and 13b support the output shaft 12 rotatably relative to the housing 11. Specifically, one bearing 13a supports a portion of the output shaft 12 near the one axial end portion thereof to be rotatable relative to the lid body 17. The other bearing 13b supports the other axial end portion of the output shaft 12 to be rotatable relative to a retaining recessed portion 19 provided in a central portion of a side surface on one axial side of a bottom portion 18 forming the housing body 16.

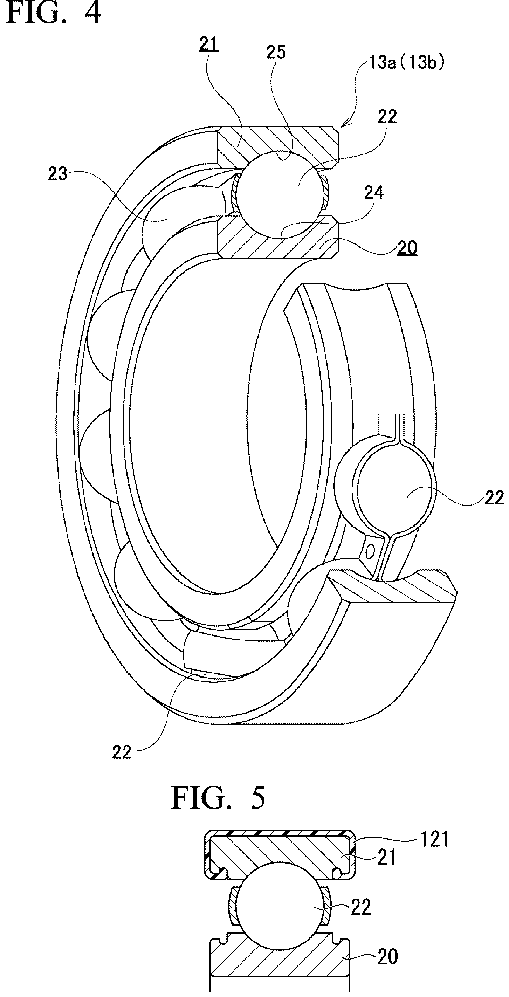

The two bearings 13a and 13b are each configured of a radial deep groove ball bearing as shown in FIG. 4. The radial deep groove ball bearing includes an inner ring 20, an outer ring 21, a plurality of balls 22, each of which is a rolling element, and a retainer 23.

The inner ring 20 includes an inner ring raceway 24 having an arc-shaped cross-sectional shape on its outer circumferential surface. The outer ring 21 includes an outer ring raceway 25 having an arc-shaped cross-sectional shape on its inner circumferential surface. The plurality of balls 22 are held by the retainer 23 and are disposed to be rollable between the inner ring raceway 24 and the outer ring raceway 25.

An inner circumferential surface of the inner ring 20 forming the one bearing 13a is fitted tightly externally to an outer circumferential surface of a portion of the output shaft 12 near the one axial end portion. An outer circumferential surface of the outer ring 21 forming the one bearing 13a is fitted tightly externally to an inner circumferential surface of the lid body 17. An inner circumferential surface of the inner ring 20 forming the other bearing 13b is fitted tightly externally to an outer circumferential surface of an end portion on the other axial side of the output shaft 12. An outer circumferential surface of the outer ring 21 forming the other bearing 13b is fitted tightly externally to an inner circumferential surface of the retaining recessed portion 19.

The motor stator 14 is formed into a cylindrical shape as a whole and is fixed by being internally fitted to an inner circumferential surface of the housing body 16.

The motor rotor 15 is formed into a cylindrical shape as a whole and is fixed by being externally fitted to the output shaft 12 radially inside the motor stator 14.

In the electric motor 10, when the motor stator 14 is energized, an electromagnetic force is generated that rotates the motor rotor 15 relative to the motor stator 14, and the output shaft 12 rotates together with the motor rotor 15.

In the case of manufacturing the inner ring 20 and the outer ring 21, forging is performed on a hard metal material such as a medium carbon steel or a bearing steel to obtain intermediate bodies having rough shapes of the respective target components (the inner ring 20 or the outer ring 21), and then the respective intermediate bodies are sequentially subjected to cutting to adjust the shapes, heat treatment to impart necessary mechanical properties such as hardness, and finishing to achieve final shapes and surface roughness.

In one example, the grinding method using the processing device 1 can be applied to perform grinding as a finishing process on an outer circumferential surface of a ring-shaped material, with the inner ring 20 or outer ring 21 as the ring-shaped material. In this application, when the outer circumferential surface of the inner ring 20 is ground, at least the inner ring raceway 24 can be ground.

In another example, the grinding method for a ring-shaped member using the processing device 1 can be applied to grind not only the outer circumferential surfaces of the inner ring 20 and outer ring 21 of the bearings 13a and 13b forming the electric motor 10, but also be applied to perform grinding on outer circumferential surfaces of various ring-shaped members, for example, outer circumferential surfaces of ring-shaped members such as raceways forming bearings incorporated in various mechanical devices and automobiles.

In one example, the bearings 13a and 13b shown in FIGS. 3 and 4 can have a coating film provided on a surface of the inner ring 20 or outer ring 21. For example, the coating film imparts functions such as wear resistance, corrosion resistance, adhesion resistance, antimagnetic properties, mold releasability, and/or insulation properties to the bearings 13a and 13b. For example, the coating film is made of a material that is substantially the same as or different from a material of a main body of the inner ring 20 or outer ring 21. Various materials, such as resin materials, metal materials, or ceramics, can be applied to the coating film. The bearing with the coating film is not limited to the form of the bearing shown in FIGS. 3 and 4. Further, the bearing with the coating film can be applied to various devices, not limited to electric motors.

In one example, as shown in FIG. 5, at least the outer circumferential surface of the outer ring (ring-shaped member) 21 is covered with a coating film 121. For example, the outer circumferential surface covered with the coating film 121 (coating surface (coating film 121 on the outer circumferential surface)) is processed by a grinding device. In the grinding device 100 shown in FIG. 13, the outer circumferential surface of the ring-shaped member (for example, the outer ring) 103 is supported by the shoes 104. In this case, when the coating surface is ground, there is a possibility that marks or scratches (for example, marks from the shoes 104 or scratches caused by sand grains that have entered between the shoes 140 and the ring-shaped member 103) may occur on the coating film on the outer circumferential surface. On the other hand, in the grinding device 1 shown in FIG. 1, the inner circumferential surface 5b of the ring-shaped member 5 is supported by the support portion 42, and the support portion 42 is prevented from coming into contact with the outer circumferential surface 5a of the ring-shaped member 5 when the coating surface is ground. As a result, occurrence of marks of scratches and deterioration of a function of the coating film are inhibited.

For example, the processing method for the ring-shaped member 5 includes a metal surface grinding process for grinding the outer circumferential surface and/or inner circumferential surface of the ring-shaped member 5, a coating film forming process for forming the coating film on the outer circumferential surface of the ring-shaped member 5 after the metal surface grinding process, and a coating surface grinding process for grinding the outer circumferential surface (coating surface) on which the coating film has been formed. The metal surface grinding process makes the radial thickness (wall thickness) of the ring-shaped member 5 uniform. Even if the coating film formed in the coating film formation process is not uniform, the coating surface grinding process makes the thickness of the coating film uniform. In addition, by supporting the inner circumferential surface of the ring-shaped member 5 when the coating surface is ground, the occurrence of marks or scratches associated with supporting the coating surface is avoided.

In one example, prior to the step of coating the ring-shaped member 5 with the film, both the outer circumferential surface and the inner circumferential surface of the ring-shaped member 5 are processed by the grinding device. For example, the outer circumferential surface is ground first, and then the inner circumferential surface is ground. Further, the coating film is formed on the outer circumferential surface of the ring-shaped member 5, and then the outer circumferential surface covered with the coating film (the coating film on the outer circumferential surface of the coating surface) is processed by the grinding device.

For example, in the grinding of the outer circumferential surface before the coating process, the outer circumferential surface or the inner circumferential surface of the ring-shaped member is supported by a shoe. Also, in the grinding of the inner circumferential surface before the coating process, the outer circumferential surface of the ring-shaped member is supported by a shoe (outer shoe, outer diameter shoe, or outer support portion).

In the grinding of the inner circumferential surface of the ring-shaped member 5, the grinding wheel is disposed on an inner side (inner diameter side) of the ring-shaped member 5, and the shoe (outer shoe) is disposed on an outer side thereof. For example, the support position by the outer shoe and the contact position between the grinding wheel and the ring-shaped member 5 on the inner circumferential surface are disposed on or near a straight line extending in the radial direction of the ring-shaped member 5. That is, the support position by the outer shoe and the contact position between the grinding wheel and the ring-shaped member on the inner circumferential surface are substantially in a front-back positional relationship with the wall of the ring-shaped member 5 interposed therebetween. The outer shoe is disposed at a position opposite to (outside) the grinding position by the grinding wheel disposed on the inner diameter side of the ring-shaped member 5. The outer shoe receives a radially outward force from the grinding wheel acting on the inner circumferential surface of the ring-shaped member 5 on its outer circumferential surface on its outer (back) side. The ring-shaped member 5 is supported by the shoe (support portion) at or near the circumferential position substantially the same as the circumferential position at which the pressing force of the grinding wheel acts. For that reason, a change in the shape of the ring-shaped member 5 during grinding is inhibited. In addition, the inner circumferential surface of the ring-shaped member 5 is ground with the outer circumferential surface, which has been adjusted to a uniform roundness by grinding, as a reference. This is advantageous in improving roundness of an outer diameter and an inner diameter of the ring-shaped member 5.

Further, in the grinding of the inner circumferential surface of the ring-shaped member 5, the radial thickness of the ring-shaped member 5 is controlled. For example, the position of the grinding wheel is controlled with a position corresponding to the surface (seat surface) of the outer shoe (support portion), which abuts the outer circumferential surface of the ring-shaped member 5, as a reference , and the ring-shaped member 5 having a predetermined uniform radial thickness over the entire circumference is formed.

After that, the coating film is formed on the outer circumferential surface of the ring-shaped member 5, and the grinding process is performed on the coating surface on which the coating film is formed. For example, in the grinding device 1 shown in FIG. 1, the coating surface (outer circumferential surface 5a) is ground while the inner circumferential surface 5b of the ring-shaped member 5 is supported by the support portion 42. The grinding of the coating surface includes the step of rotating the ring-shaped member 5 in the circumferential direction around the reference axis, and the step of pressing the grinding wheel 3 against the coating surface (the outer circumferential surface 5a on which the coating film is formed) of the ring-shaped member 5, which is the step of supporting the ring-shaped member 5 by bringing the support portion 42 into contact with the inner circumferential surface of the ring-shaped member 5 in at least one circumferential range around the reference axis. When the coating surface is ground, the support portion 42 is disposed on the inner diameter side of the ring-shaped member 5. When the coating surface is ground, the support portion 42 is prevented from coming into contact with the outer circumferential surface 5a of the ring-shaped member 5. For that reason, the occurrence of marks and scratches and the deterioration of the function of the coating film are inhibited. In addition, grinding the coating surface makes the thickness of the coating film uniform over the entire circumference. The uniform coating film is advantageous for obtaining excellent film functions and excellent film effects.

In another example, in grinding the ring-shaped member 5 before the coating process, the inner circumferential surface may be ground first, and then the outer circumferential surface may be ground. Alternatively, in grinding the ring-shaped member 5 before the coating process, only one of the inner circumferential surface and the outer circumferential surface of the ring-shaped member 5 may be ground.

For example, prior to the step of coating the ring-shaped member with a film, the outer circumferential surface of the ring-shaped member is processed by the grinding device. In the grinding device 1 shown in FIG. 1, the inner circumferential surface 5b of the ring-shaped member 5 is supported by the support portion 42. In processing the outer circumferential surface 5a of the ring-shaped member 5, the radial thickness of the ring-shaped member 5 is controlled. For example, the position of the grinding wheel 3 is controlled with the position corresponding to the surface (seat surface) of the support portion 42, which abuts the inner circumferential surface 5b of the ring-shaped member 5, as a reference, and the ring-shaped member 5 having a predetermined uniform radial thickness over the entire circumference is formed. After that, the coating film is formed on the outer circumferential surface 5a of the ring-shaped member 5. Further, the grinding process is performed on the coating film, and the thickness of the coating film is made uniform over the entire circumference. The uniform coating film is advantageous for obtaining excellent film functions and excellent film effects.

In one example, the seat surface of the support portion 42 (seat surfaces 9a and 9b of the support members 8a and 8b) that abuts the inner circumferential surface 5b of the ring-shaped member 5 have uniform planar shapes with no substantial irregularities.. In another example, the seat surface of the support portion 42 has irregularities, curves, corners, and/or steps. For example, the seat surface of the support portion 42 has a shape corresponding to at least a part of the irregularities, curves, corners, and/or steps on the inner circumferential surface 5b of the ring-shaped member 5. The seat surface of the support portion 42 having a shape that at least partially matches the shape of the inner circumferential surface 5b is advantageous for improving support stability, polishing accuracy, and/or product quality, or the like.

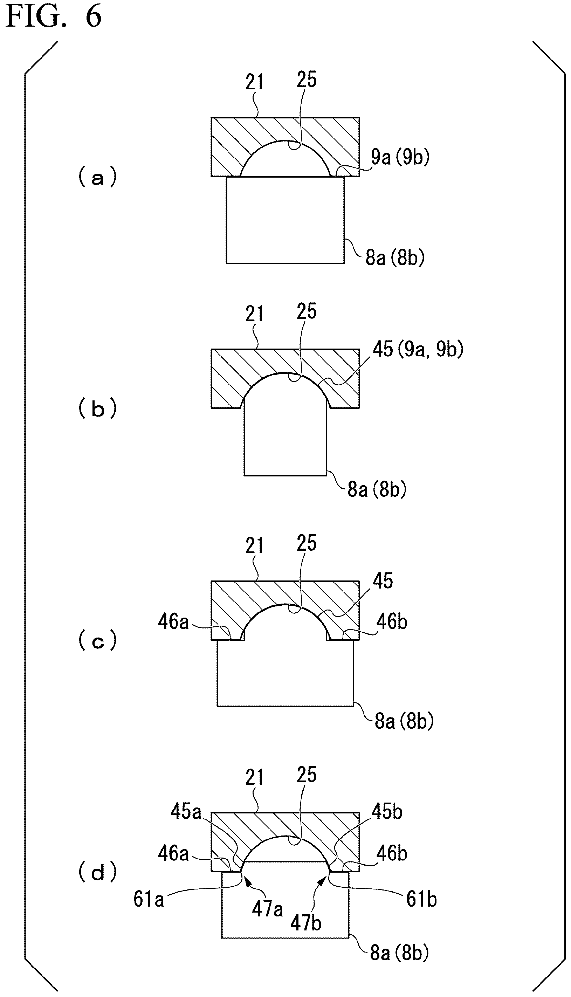

FIG. 6 shows an example of the seat surface 9a (9b) of the support member 8a (8b) set for the outer ring 21. In the example shown in part (a) of FIG. 6, the seat surface 9a (9b) of the support member 8a (8b) has a surface shape (for example, a planar shape) corresponding to the inner circumferential surface different from the raceway surface 25 of the outer ring 21. The seat surface 9a (9b) is in contact with the inner circumferential surface of the outer ring 21 that is located radially inward from the raceway surface 25, and is not in contact with the raceway surface 25.

In the example shown in part (b) of FIG. 6, the seat surface 9a (9b) (or a contour of the seat surface) has a curved shape (curve or curved surface) 45 corresponding to the curve in the raceway surface 25 (or a contour of the raceway surface) of the outer ring 21. For example, the seat surface 9a (9b) has a curve 45 that at least partially matches a curve of the raceway surface 25. At least a part of the seat surface 9a (9b) of the support member 8a (8b) can be in contact with the raceway surface 25 of the outer ring 21.

In the example shown in part (c) of FIG. 6, the seat surface 9a (9b) (or the contour of the seat surface) has the curved shape (curve or curved surface) 45 corresponding to the curve in the raceway surface 25 (or the contour of the raceway surface) of the outer ring 21, and surface shapes (for example, planar shapes) 46a and 46b corresponding to the inner circumferential surface different from the raceway surface 25. For example, the seat surface 9a (9b) has the curve 45 that at least partially matches the curve of the raceway surface 25. Also, the seat surface 9a (9b) has the surface shapes (for example, planar shapes) 46a and 46b corresponding to the inner circumferential surface different from the raceway surface 25 of the outer ring 21. At least a part of the seat surface 9a (9b) of the support member 8a (8b) can be in contact with the raceway surface 25 of the outer ring 21 and/or a surface different from the raceway surface 25.

In the example shown in part (d) of FIG. 6, the seat surface 9a (9b) (or the contour of the seat surface) has curved shapes (curves of curved surfaces) 45a and 45b corresponding to the curve in the raceway surface 25 (or the contour of the raceway surface) of the outer ring 21, and the surface shapes (for example, planar shapes) 46a and 46b corresponding to the inner circumferential surface different from the raceway surface 25. The curved surface 45a and the surface 46a form a corner portion (inner corner portion) 47a. The curved surface 45b and the surface 46b form a corner portion (inner corner portion) 47b. The corner portion 47a and the corner portions 47b are disposed apart from each other in the axial direction. The corner portion 47a has a shape corresponding to a corner portion (outer corner portion) 61a on the inner circumferential surface side of the outer ring 21. The corner portion 47a at least partially matches a corner portion 61b. The corner portion 47b has a shape corresponding to the corner portion (outer corner portion) 61b on the inner circumferential surface side of the outer ring 21. The corner portion 47b at least partially matches the corner portion 61b. At least a part of the seat surface 9a (9b) of the support member 8a (8b) can be in contact with the raceway surface 25 of the outer ring 21 and/or a surface different from the raceway surface 25.

In one example, the support portion 42 has a surface at least a part of which is in contact with the raceway surface 25 of the outer ring 21. The raceway surface 25 of the outer ring 21 is supported by the seat surface 45 of the support portion 42 (the seat surfaces 9a and 9b of the support members 8a and 8b). In processing the outer circumferential surface of the outer ring 21 or the outer circumferential surface including the coating film, the radial thickness (groove bottom thickness) of the outer ring 21 can be controlled. For example, in the grinding device, the position of the grinding wheel is controlled with the position corresponding to the seat surface of the support portion 42, which abuts the raceway surface 25 of the outer ring 21, as a reference, and the outer ring 21 is formed with a predetermined uniform radial thickness over the entire circumference. If necessary, the outer ring 21 is additionally heat treated, and then the inner circumferential surface of the outer ring 21 is subjected to turning or grinding.

The above-described processing of the coating film and/or shape of the seat surface can be applied to various forms, including the embodiments described below. In one example, the support portion 42 brought into contact with the inner circumferential surface of the ring-shaped member has a rotatable roller, and an outer circumferential surface (seat surface) of the roller has a shape corresponding to at least a part of the irregularities, curves, corners, and/or steps on the inner circumferential surface of the ring-shaped member. The ring-shaped member has a first inner circumferential surface and a second inner circumferential surface at least a part of which has a depth with respect to the first inner circumferential surface, and the support portion 42 is provided to come into contact with the second inner circumferential surface. For example, in the grinding device, the roller of the support portion 42 abuts the raceway surface 25 of the outer ring 21, and the roller comes into rolling contact with the raceway surface 25. This is advantageous in inhibiting marks and scratches on the raceway surface 25.

### [Second embodiment]

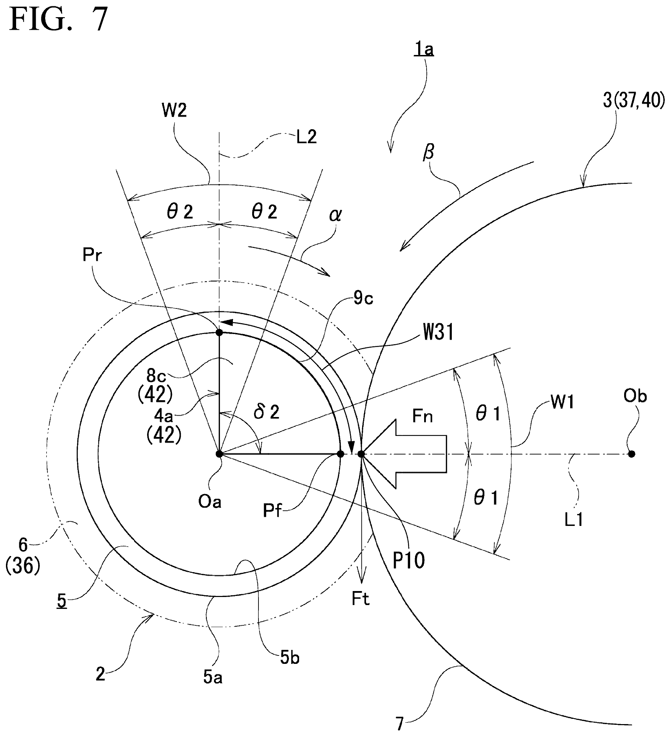

A second embodiment will be described with reference to FIG. 7.

In the second embodiment, the support portion 42 of a support mechanism 4a has one support member 8c. The support mechanism 4 has the support portion 42 brought into contact with the inner circumferential surface 5b of the ring-shaped member 5 in one circumferential range (W31) around the reference axis (Oa). In the second embodiment, the number of components forming the support mechanism 4a is kept smaller. In one example, the radially inner support member 8c forming the support mechanism 4a has a shoe.

A circumferential width of the portion (seat surface (support surface or contact surface) 9c) of one radially inner support member 8c that comes into contact with the inner circumferential surface 5b of the ring-shaped member 5 is set to δ2 when expressed as the central angle centered on the central axis Oa of the ring-shaped member 5. For example, δ2 can be set to 20 degrees to 90 degrees, 30 degrees to 90 degrees, 45 degrees to 180 degrees, or 75 degrees to 90 degrees. For example, δ2 is approximately 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, or 180 degrees. In the example of FIG. 7, δ2 is 90 degrees. The above numerical values are merely examples, and the present disclosure is not limited thereto.

In one example, the radially inner support member 8c has a sector-shaped end face shape with the central angle of δ2 (90°) when viewed in the axial direction. That is, a tip surface (seat surface) 9c of the radially inner support member 8c is formed of a partial cylindrical surface with the central angle of δ2 (90°), and a radius of curvature thereof is substantially the same as the radius of curvature of the inner circumferential surface 5b of the ring-shaped member 5. That is, the entire tip surface 9c of the radially inner support member 8c is in sliding contact with the inner circumferential surface 5b of the ring-shaped member 5.

In the example of FIG. 7, since the circumferential width (central angle δ2) of the portion of the radially inner support member 8c that comes into contact with the inner circumferential surface 5b of the ring-shaped member 5 is set to be sufficiently wide, the inner circumferential surface 5b of the ring-shaped member 5 can be stably supported. In another example, a contact width of the radially inner support member 8c can be set to be relatively narrow, as in the support member 8a of the first embodiment.

In the second embodiment, although there is only one support member 8c, a support position (Pf) and a contact position (P10) thereof are substantially in a front-back positional relationship with the wall of the ring-shaped member 5 interposed therebetween. The support member 8c receives a radially inward force from the grinding wheel 3 acting on the outer circumferential surface 5a of the ring-shaped member 5 on the inner circumferential surface 5b on its inner side. The ring-shaped member 5 is supported by the support portion 42 at or near the circumferential position substantially the same as the circumferential position at which the pressing force of the grinding wheel 3 acts. A change in the shape of the ring-shaped member 5 during grinding is inhibited.

In the example of FIG. 7, a front side end portion of the tip surface 9c of the radially inner support member 8c in the rotation direction α of the ring-shaped member 5 is present in the first circumferential range W1.

In one example, a front side edge Pf of the tip surface 9c of the radially inner support member 8c in the rotation direction α of the ring-shaped member 5 is disposed at the same circumferential position as the first imaginary straight line L1. Alternatively, the edge Pf is disposed forward from the first imaginary straight line L1 in the rotation direction α of the ring-shaped member 5. In the example of FIG. 7, the edge Pf is disposed at substantially the same circumferential position as the first imaginary straight line L1.

In FIG. 7, a rear side end portion of the tip surface 9c of the radially inner support member 8c in the rotation direction α of the ring-shaped member 5 is present in the second circumferential range W2.

In one example, a rear side edge Pr of the tip surface 9c of the radially inner support member 8c in the rotation direction α of the ring-shaped member 5 is disposed at substantially the same circumferential position as the second imaginary straight line L2.

Other configurations, operations, and effects are the same as those of the first embodiment.

### [Third embodiment]

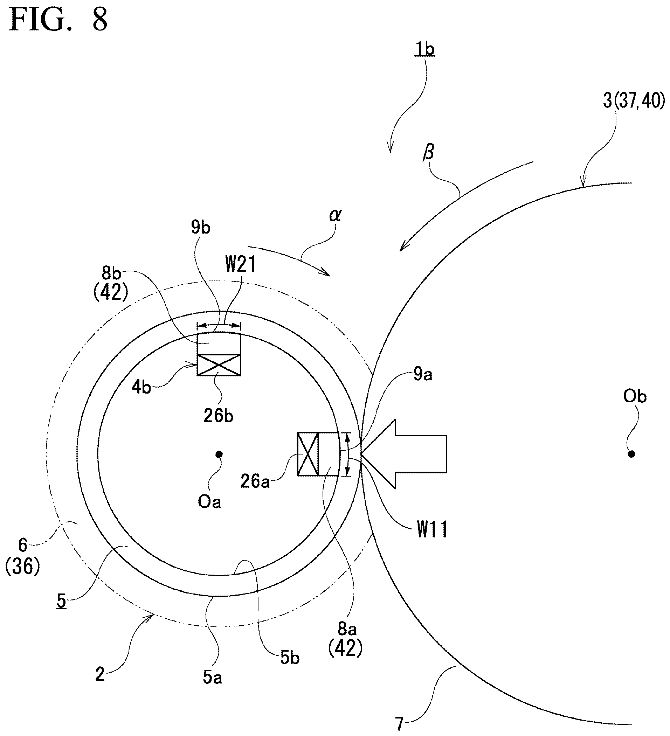

A third embodiment will be described with reference to FIG. 8.

In a processing device 1b of the third embodiment, a support mechanism 4b has elastic members (biasing members) 26a and 26b that elastically bias the radially inner support members 8a and 8b toward the inner circumferential surface 5b of the ring-shaped member 5.

In one example, each of the radially inner support members 8a and 8b are supported on a support base (not shown) forming the support mechanism 4b to be displaceable in the radial direction of the ring-shaped member 5. In addition, the radially inner support members 8a and 8b are elastically biased toward the inner circumferential surface 5b of the ring-shaped member 5 respectively by the elastic members 26a and 26b that are assembled between the radially inner support members 8a and 8b and the support base.

For example, each of the elastic members 26a and 26b is configured of a coil spring. Alternatively, the elastic members 26a and 26b can be configured of various elastic members such as leaf springs and disc springs. Further, shoes (shoe tips) of the radially inner support members 8a and 8b can be configured of an elastic body such as a rubber or resin.

In the third embodiment, an elastic biasing force of each of the elastic members 26a and 26b is adjusted. The pressing force of the grinding surface 7 of the grinding wheel 3 against the outer circumferential surface 5a of the ring-shaped member 5 is prevented from becoming excessively large. The ring-shaped member 5 is more effectively prevented from elastically deforming into an elliptical shape. Alternatively, the contact pressure of the tip surfaces 9a and 9b of the radially inner support members 8a and 8b against the inner circumferential surface 5b of the ring-shaped member 5 is prevented from becoming excessively large. Occurrence of circumferential scratches (shoe scratches) on the inner circumferential surface 5b is effectively prevented.

Other configurations, operations, and effects are the same as those of the first embodiment.

### [Fourth embodiment]

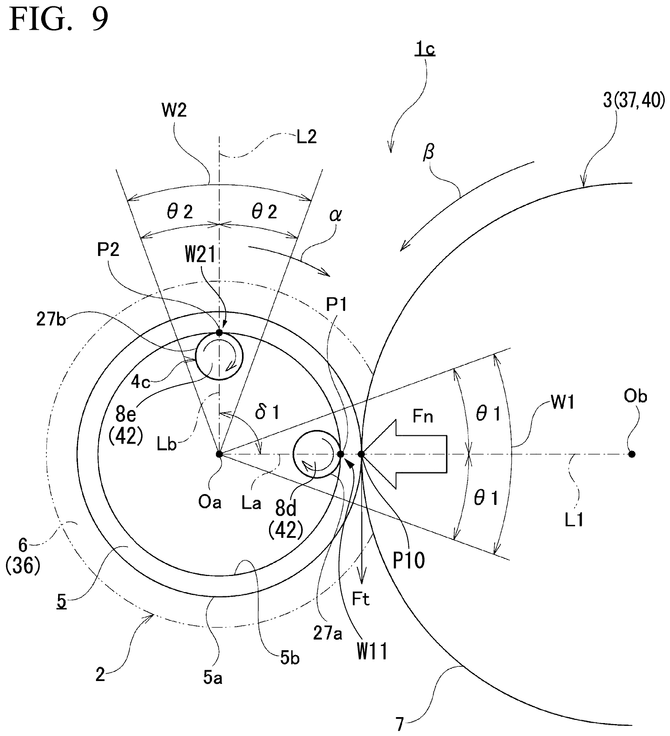

A fourth embodiment will be described with reference to FIG. 9.

In a processing device 1c of the fourth embodiment, two radially inner support members 8d and 8e in a support mechanism 4c each have a support roller that come into rolling contact with the inner circumferential surface 5b of the ring-shaped member 5.

In one example, the radially inner support members 8d and 8e respectively have outer circumferential surface 27a and 27b each having a cylindrical surface shape, and are supported by a support base (not shown) forming the support mechanism 4c to be freely rotatable about their own central axis with their own central axis disposed parallel to the central axis Oa of the ring-shaped member 5.

In one example, the portion of the outer circumferential surface 27a of one radially inner support member 8d that comes into contact with the inner circumferential surface 5b of the ring-shaped member 5 is located in the first circumferential range W1.

In one example, the circumferential center position P1 of the portion of the outer circumferential surface 27a of the one radially inner support member 8d that comes into contact with the inner circumferential surface 5b of the ring-shaped member 5 is located in the same circumferential position as the first imaginary straight line L1.

In one example, the portion of the outer circumferential surface 27b of the other radially inner support member 8e that comes into contact with the inner circumferential surface 5b of the ring-shaped member 5 is located in the second circumferential range W2.

In one example, the circumferential center position P2 of the portion of the outer circumferential surface 27b of the other radially inner support member 8e that comes into contact with the inner circumferential surface 5b of the ring-shaped member 5 is located in the same circumferential position as the second imaginary straight line L2.

In the third embodiment, since the outer circumferential surfaces 27a and 27b of the respective radially inner support members 8d and 8e are in rolling contact with the inner circumferential surface 5b of the ring-shaped member 5, occurrence of circumferential scratches on the inner circumferential surface 5b can be prevented.

Other configurations, operations, and effects are the same as those of the first embodiment.

### [Fifth embodiment]

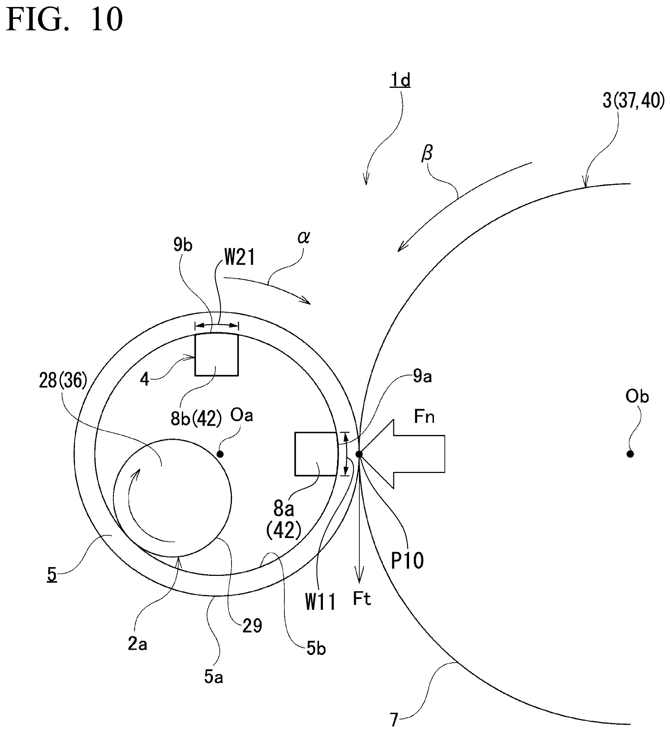

A fifth embodiment will be described with reference to FIG. 10.

In a processing device 1d of the fifth embodiment, a rotation drive mechanism 2a has a drive roller 28 having an outer circumferential surface 29 that frictionally engages with the inner circumferential surface 5b of the ring-shaped member 5, instead of the backing plate.

In one example, the drive roller 28 has the outer circumferential surface 29 having a cylindrical surface shape. For example, a central axis of the drive roller 28 is disposed parallel to the central axis Oa of the ring-shaped member 5. The drive roller 28 is driven to rotate around its own central axis.

In one example, when the outer circumferential surface 5a of the ring-shaped member 5 is ground, the drive roller 28 is disposed on a radially inner side of the ring-shaped member 5 at a circumferential position at which it does not interfere with the two radially inner support members 8a and 8b. In addition, the outer circumferential surface 29 of the drive roller 28 is frictionally engaged with the inner circumferential surface 5b of the ring-shaped member 5. In this state, the ring-shaped member 5 is rotated by the drive roller 28 being driven to rotate.

In the fifth embodiment, when the outer circumferential surface 5a of the ring-shaped member 5 is ground, the ring-shaped member 5 is rotated by rotating the drive roller 28 frictionally engaged with the inner circumferential surface 5b of the ring-shaped member 5. For this reason, even if the radial thickness of the ring-shaped member 5 is small and it is difficult to magnetically attach the axial end face of the ring-shaped member 5 to the backing plate, the ring-shaped member 5 rotates stably.

Other configurations, operations, and effects are the same as those of the first embodiment.

### [Sixth embodiment]

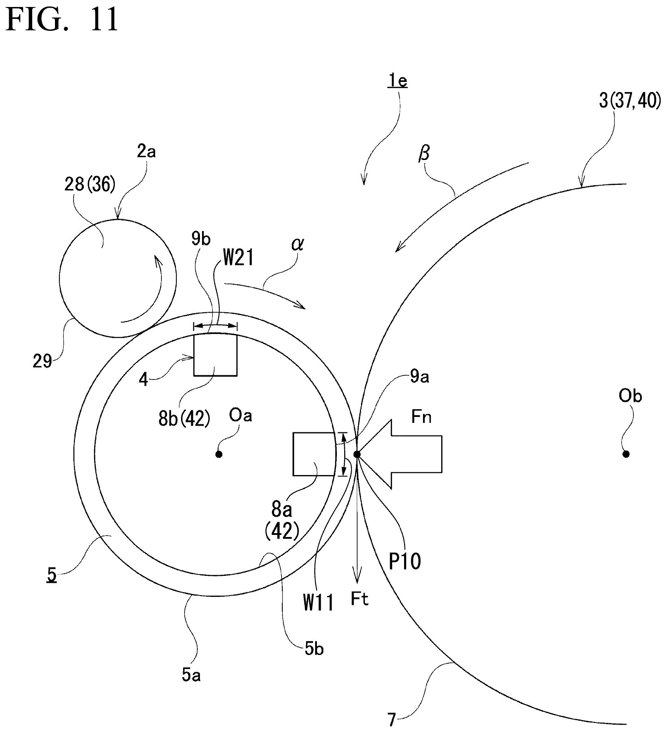

A sixth embodiment will be described with reference to FIG. 11.

In a processing device 1e of the sixth embodiment, when the outer circumferential surface 5a of the ring-shaped member 5 is ground, the drive roller 28 is disposed on a radially outer side of the ring-shaped member 5 at a circumferential position at which it does not interfere with the grinding wheel 3. In addition, the outer circumferential surface 29 of the drive roller 28 is frictionally engaged with the outer circumferential surface 5a of the ring-shaped member 5. In this state, the ring-shaped member 5 is rotated by the drive roller 28 being driven to rotate.

For this reason, in the sixth embodiment, even if the radial thickness of the ring-shaped member 5 is small and it is difficult to magnetically attach the backing plate to the axial end face of the ring-shaped member 5, the ring-shaped member 5 rotates stably.

Other configurations, operations, and effects are the same as those of the fifth embodiment.

### [Seventh embodiment]

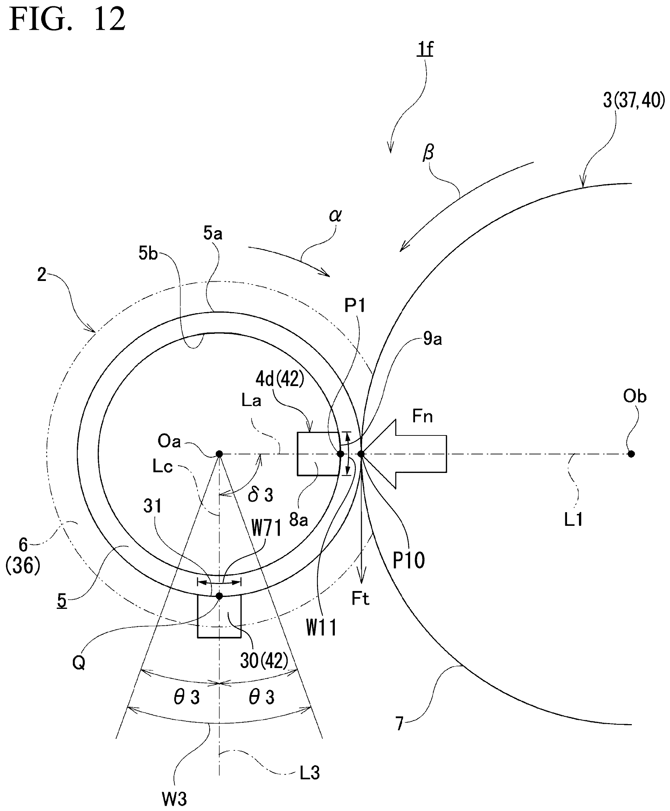

A seventh embodiment will be described with reference to FIG. 12.

In a processing device 1f of the seventh embodiment, a support mechanism 4d further has a radially outer support member 30 that comes into contact with the outer circumferential surface 5a of the ring-shaped member 5 and supports the ring-shaped member 5 in the radial direction. The support mechanism 4d has the support portion 42 that is brought into contact with the inner circumferential surface 5b of the ring-shaped member 5 in at least one circumferential range (W11) around the reference axis (Oa) and brought into contact with the outer circumferential surface 5a of the ring-shaped member 5 in at least another circumferential range (W71).

In one example, the support mechanism 4d has one radially outer support member 30. In another example, the support mechanism 4d can have a plurality of radially outer support members.

In the example of FIG. 12, when compared to the example of FIG. 1, the support mechanism 4d has the radially inner support member 8a, and also has the radially outer support member 30, instead of the radially inner support member 8b.

In one example, the radially outer support member 30 has a shoe. In another example, the radially outer support member 30 can have a support roller as in the example of FIG. 9.

In the example of FIG. 12, the support member 30 has a seat surface (tip surface, support surface, or contact surface) 31 that is brought into contact with the outer circumferential surface 5a of the ring-shaped member 5 and supports the ring-shaped member 5. At least a part of the seat surface 31 has a curved shape corresponding to the curved shape of the outer circumferential surface 5a of the ring-shaped member 5. In the grinding, when the ring-shaped member 5 rotates, the support portion 42 (the support member 8a and the support member 30) does not substantially move in the circumferential direction, and circumferential positions of the support members 8a and 30 are constant. The inner circumferential surface 5b or the outer circumferential surface 5a of the ring-shaped member 5 moves in the circumferential direction relative to the support portion 42 (the seat surface 9a of the support member 8a and the seat surface 31 of the support member 30). The seat surface 9a is in sliding contact with the inner circumferential surface 5b of the ring-shaped member 5, and the seat surface 31 is in sliding contact with the outer circumferential surface 5a.

In one example, the radially outer support member 30 is supported by and fixed to a support base (not shown) forming the support mechanism 4d. The radially outer support member 30 has the tip surface (seat surface, support surface, or contact surface) 31 that is in sliding contact with the outer circumferential surface 5a of the ring-shaped member 5. The tip surface 31 is configured of a partially cylindrical surface that is curved along the outer circumferential surface 5a of the ring-shaped member 5. A radius of curvature of the tip surface 31 is substantially the same as the radius of curvature of the outer circumferential surface 5a of the ring-shaped member 5. That is, the tip surface 31 is in surface contact with the outer circumferential surface 5a of the ring-shaped member 5. In another example, the tip portion (seat surface) of the radially outer support member 30, which is a shoe, can be brought into line or point contact with the outer circumferential surface 5a of the ring-shaped member 5.

The circumferential center position P1 of the portion of the radially inner support member 8a that comes into contact with the inner circumferential surface 5b of the ring-shaped member 5 and a circumferential center position Q of the portion of the radially outer support member 30 that comes into contact with the outer circumferential surface 5a of the ring-shaped member 5 can be disposed apart from each other by δ3 when expressed as the central angle centered on the central axis Oa of the ring-shaped member 5. In other words, the angle between one imaginary straight line La connecting the circumferential center position P1 and the central axis Oa of the ring-shaped member 5 and the other imaginary straight line Lc connecting the circumferential center position Q and the central axis Oa of the ring-shaped member 5 can be δ3. δ3 can be set to, for example, 20 degrees to 160 degrees, 75 degrees to 105 degrees, or 90 degrees to 105 degrees. For example, δ3 is approximately 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, or 180 degrees. In the example of FIG. 12, δ3 is 90 degrees. The above numerical values are merely examples, and the present disclosure is not limited thereto.

In one example, the circumferential position and the shape of the radially outer support member 30 are regulated so that at least a part of the tip surface 31, which is the portion of the radially outer support member 30 that comes into contact with the outer circumferential surface 5a of the ring-shaped member 5, is present in a third circumferential range W3 in which the central angle centered on the central axis Oa of the ring-shaped member 5 is in the range of ±θ3, with a third virtual straight line L3 extending from the central axis Oa of the ring-shaped member 5 in a direction shifted by 90 degrees in the rotation direction α of the ring-shaped member 5 with respect to the first virtual straight line L1 as a reference, when viewed in the axial direction of the ring-shaped member 5. For example, θ3 can be set to 45 degrees or 22.5 degrees. For example, θ3 can be set to approximately 60, 55, 50, 45, 40, 35, 30, 25, 20, 15, 10, or 5 degrees. The above numerical values are merely examples, and the present disclosure is not limited thereto.

In another example, when the outer circumferential surface 5a of the ring-shaped member 5 is ground, if the grinding wheel 3 rotates in the same direction as the rotation direction of the ring-shaped member 5, the third imaginary straight line L3 can be a straight line extending from the central axis of the ring-shaped member 5 in a direction shifted by 90 degrees from the first imaginary straight line L1 in the opposite direction to the rotation direction of the ring-shaped member 5.

In one example, the circumferential position of the radially outer support member 30 and the shape of the tip surface 31 are regulated so that the entire portion of the tip surface 31 of the radially outer support member 30 that comes into contact with the outer circumferential surface 5a of the ring-shaped member 5 is present in the third circumferential range W3.

For example, the angle between the third virtual straight line L3 and the other virtual straight line Lc can be set to -45 degrees to +45 degrees, 0 degrees to +45 degrees, or 0 degrees to +15 degrees when the rotation direction α of the ring-shaped member 5 is defined as positive. In the example of FIG. 12, the angle between the third virtual straight line L3 and the other virtual straight line Lc is set to 0 degrees, and the circumferential center position Q of the tip surface 31 of the radially outer support member 30 is positioned on the third virtual straight line L3.

When the outer circumferential surface 5a of the ring-shaped member 5 is ground, a tangential processing force (grinding force acting downward in FIG. 12) Ft is applied to the outer circumferential surface 5a of the ring-shaped member 5 at the contact point between the outer circumferential surface 5a of the ring-shaped member 5 and the grinding surface 7 of the grinding wheel 3. For this reason, when an outer diameter of the outer circumferential surface 5a is reduced as the grinding of the outer circumferential surface 5a of the ring-shaped member 5 progresses, the ring-shaped member 5 moves in a direction approaching the radially outer support member 30 relative to the tip surface of the backing plate 6 (downward in FIG. 12) in accordance with the reduction in the outer diameter. Thus, an appropriate sliding state of the tip surface 31 of the radially outer support member 30 against the outer circumferential surface 5a of the ring-shaped member 5 is maintained.

Additionally, the processing device can be provided with a mechanism for moving the radially outer support member 30 closer to the outer circumferential surface of the ring-shaped member in accordance with the reduction in the outer diameter of the outer circumferential surface 5a as the processing of the outer circumferential surface 5a of the ring-shaped member 5 progresses. For example, a configuration in which the support mechanism 4d has an elastic member (biasing member) that elastically biases the radially outer support member 30 toward the outer circumferential surface 5a of the ring-shaped member 5 can be adopted.

Other configurations, operations, and effects are the same as those of the first embodiment.

The present disclosure can be implemented by appropriately combining the above-mentioned embodiments to the extent that no contradiction occurs.

In one embodiment, the processing device for a ring-shaped member includes a rotation drive mechanism for rotating a metal ring-shaped member in a predetermined direction, a grinding stone pressed against an outer circumferential surface of the ring-shaped member to process the outer circumferential surface of the ring-shaped member, and a support mechanism having a radially inner support member that comes into contact with an inner circumferential surface of the ring-shaped member to support the ring-shaped member in a radial direction thereof.

In the above processing device, for example, the support mechanism has a plurality of the radially inner support members. In this case, for example, the support mechanism has two radially inner support members.

In the above processing device, for example, circumferential center positions of the portions, which come into contact with the inner circumferential surface of the ring-shaped member, of the two radially inner support members adjacent to each other in a circumferential direction of the ring-shaped member among the plurality of radially inner support members are disposed apart from each other by 20 degrees or more and 160 degrees or less when expressed as a central angle centered on a central axis of the ring-shaped member.

In the above processing device, for example, the radially inner support members are configured by shoes that come into sliding contact with the inner circumferential surface of the ring-shaped member.

In the above processing device, for example, a circumferential width of the portions of the radially inner support members that come into contact with the inner circumferential surface of the ring-shaped member is 45 degrees to 180 degrees when expressed as the central angle centered on the central axis of the ring-shaped member.

In the above processing device, for example, the support mechanism has elastic members that elastically bias the radially inner support members toward the inner circumferential surface of the ring-shaped member.

In the above processing device, for example, each of the radially inner support members is configured of a support roller that comes into rolling contact with the inner circumferential surface of the ring-shaped member.

In the above processing device, for example, the rotation drive mechanism has a backing plate that rotates the ring-shaped member while magnetically attaching an axial end face of the ring-shaped member.

In the above processing device, for example, the rotation drive mechanism includes a drive roller having an outer circumferential surface that is frictionally engaged with the inner circumferential surface or the outer circumferential surface of the ring-shaped member.

In the above processing device, for example, the grinding stone is configured of a rotating grinding stone that rotates about its own central axis and presses its outer circumferential surface against the outer circumferential surface of the ring-shaped member.

In the above processing device, for example, at least a part of portions of the radially inner support members that come into contact with the inner circumferential surface of the ring-shaped member is present in a first circumferential range in which the central angle centered on the central axis of the ring-shaped member is in the range of ±45 degrees, with a first imaginary straight line connecting the central axis of the ring-shaped member and the central axis of the grinding stone as a reference, when viewed in an axial direction of the ring-shaped member.

In the above processing device, for example, at least a part of the portions of the radially inner support members that come into contact with the inner circumferential surface of the ring-shaped member is present in a second circumferential range in which the central angle centered on the central axis of the ring-shaped member is in the range of ±45 degrees, with a second imaginary straight line extending from the central axis of the ring-shaped member in a direction that forms an angle of 90 degrees with the first imaginary straight line as a reference, when viewed in the axial direction of the ring-shaped member.

In the above processing device, for example, the grinding stone is a rotating grinding stone that rotates about a central axis thereof in a direction opposite to the predetermined direction so that a circumferential speed of an outer circumferential surface thereof is faster than a circumferential speed of the outer circumferential surface of the ring-shaped member, while pressing the outer circumferential surface thereof against the circumferential surface of the ring-shaped member, and the second imaginary straight line extends from the central axis of the ring-shaped member in a direction that is shifted by 90 degrees from the first imaginary straight line in a direction opposite to a rotation direction of the ring-shaped member.

In the above processing device, for example, at least a part of a portion of one of a plurality of the support members that comes into contact with the inner circumferential surface of the ring-shaped member is present in the first circumferential range, and at least a part of a portion of another of the plurality of support members that comes into contact with the inner circumferential surface of the ring-shaped member is present in the second circumferential range.

In the above processing device, for example, when the support mechanism has one support member, a part of a portion of the support member that comes into contact with the inner circumferential surface of the ring-shaped member is present in the first circumferential range, and another part of the portion of the support member that comes into contact with the inner circumferential surface of the ring-shaped member is present in the second circumferential range.

In the above processing device, for example, the support mechanism further has a radially outer support member that comes into contact with the outer circumferential surface of the ring-shaped member to support the ring-shaped member in the radial direction.

In the above processing device, for example, the support mechanism has only the radially inner support member out of the radially inner support member and the radially outer support member that comes into contact with the outer circumferential surface of the ring-shaped member to support the ring-shaped member in the radial direction.

In one embodiment, a processing method for a ring-shaped member uses the above-mentioned processing device for a ring-shaped member to process the outer circumferential surface of the metal ring-shaped member by pressing the grinding stone against the outer circumferential surface of the ring-shaped member while the support mechanism supports the metal ring-shaped member in the radial direction and the rotation drive mechanism rotates the ring-shaped member in a predetermined direction around the central axis of the ring-shaped member.

In one embodiment, a method for manufacturing a bearing including a ring-shaped member includes a step of processing the outer circumferential surface of the ring-shaped member using the above-mentioned processing method for a ring-shaped member.

In the above-mentioned manufacturing method, for example, the bearing includes an inner ring as the ring-shaped member.

In the above-mentioned manufacturing method, for example, the bearing includes an outer ring as the ring-shaped member.

In one embodiment, a method for manufacturing a mechanical device is a method for manufacturing a mechanical device including a bearing, and includes a step of manufacturing the bearing using the above-mentioned method for manufacturing a bearing.

In one embodiment, the method for manufacturing a vehicle is a method for manufacturing a vehicle including a bearing, and includes a step of manufacturing the bearing using the above-mentioned method for manufacturing a bearing.

### REFERENCE SIGNS LIST

1, 1a, 1b, 1c, 1d, 1e, 1f Processing device
2, 2a Rotation drive mechanism
3 Grinding wheel
4, 4a, 4b, 4c, 4d Support mechanism
5 Ring-shaped member
5a Outer circumferential surface
5b Inner circumferential surface
6 Backing plate
7 Grinding surface
8a, 8b, 8c, 8d, 8e Radially inner support member
9a, 9b, 9c Tip surface
10 Electric motor
11 Housing
12 Output shaft
13a, 13b Bearing
14 Motor stator
15 Motor rotor
16 Housing body
17 Lid body
18 Bottom portion
19 Retaining recessed portion
20 Inner ring
21 Outer ring
22 Ball
23 Retainer
24 Inner ring raceway
25 Outer ring raceway
26a, 26b Elastic member
27a, 27b Outer circumferential surface
28 Drive roller
29 Outer circumferential surface
30 Radially outer support member
31 Tip surface
40 Grinding mechanism
100 Grinding device
101 Backing plate
102 Grinding wheel
103 Ring-shaped member
104 Shoe
105 Grinding surface

## Claims

1. A processing device for a ring-shaped member comprising:
a rotation drive mechanism configured to rotate a metal ring-shaped member in a circumferential direction around a reference axis;
a grinding mechanism including a grinding stone pressed against an outer circumferential surface of the ring-shaped member; and
a support mechanism that includes a support portion brought into contact with an inner circumferential surface of the ring-shaped member in at least one circumferential range around the reference axis to support the ring-shaped member.

2. The processing device for a ring-shaped member according to claim 1, wherein the at least one circumferential range includes a circumferential position corresponding to a contact position between the grinding stone and the ring-shaped member.

3. The processing device for a ring-shaped member according to claim 1 or 2, wherein the support portion includes a plurality of radially inner support members each of which is brought into contact with the inner circumferential surface of the ring-shaped member.

4. The processing device for a ring-shaped member according to claim 3, wherein the plurality of radially inner support members include a first member having a first support range and a second member having a second support range, and an angle between a circumferential center position of the first support range and a circumferential center position of the second support range is 20 degrees or more and 160 degrees or less.

5. The processing device for a ring-shaped member according to any one of claims 1 to 4, wherein the support portion includes a shoe brought into sliding contact with the inner circumferential surface of the ring-shaped member.

6. The processing device for a ring-shaped member according to claim 5, wherein the support portion includes a region that can come into contact with the inner circumferential surface of the ring-shaped member, and a central angle corresponding to the region is 20 degrees or more and 180 degrees or less.

7. The processing device for a ring-shaped member according to claim 5 or 6, wherein the support mechanism includes a biasing member configured to bias the support portion toward the inner circumferential surface of the ring-shaped member.

8. The processing device for a ring-shaped member according to any one of claims 1 to 7, wherein the support portion comes into rolling contact with the inner circumferential surface of the ring-shaped member.

9. The processing device for a ring-shaped member according to any one of claims 1 to 8, wherein the rotation drive mechanism includes a holding member configured to hold the ring-shaped member by magnetic attachment and drives the ring-shaped member to rotate.

10. The processing device for a ring-shaped member according to any one of claims 1 to 9, wherein the rotation drive mechanism includes a drive roller having an outer circumferential surface that is frictionally engaged with the inner circumferential surface or the outer circumferential surface of the ring-shaped member.

11. The processing device for a ring-shaped member according to any one of claims 1 to 10, wherein the grinding stone is pressed against the outer circumferential surface of the ring-shaped member while rotating.

12. The processing device for a ring-shaped member according to any one of claims 1 to 11, wherein at least a part of a portion of the support portion, which comes into contact with the inner circumferential surface of the ring-shaped member, is present in a first circumferential range in which a central angle centered on a central axis of the ring-shaped member is in the range of ±45 degrees, with a first imaginary straight line connecting the central axis of the ring-shaped member and a central axis of the grinding stone as a reference, when viewed in an axial direction of the ring-shaped member.

13. The processing device for a ring-shaped member according to claim 12, wherein at least a part of the portion of the support portion, which comes into contact with the inner circumferential surface of the ring-shaped member, is present in a second circumferential range in which the central angle centered on the central axis of the ring-shaped member is in the range of ±45 degrees, with a second imaginary straight line extending from the central axis of the ring-shaped member in a direction that forms an angle of 90 degrees with the first imaginary straight line as a reference, when viewed in the axial direction of the ring-shaped member.

14. The processing device for a ring-shaped member according to claim 13,
wherein the grinding stone is configured of a rotating grinding stone that rotates in a direction opposite to the predetermined direction about a central axis thereof so that a circumferential speed of an outer circumferential surface thereof is faster than a circumferential speed of the outer circumferential surface of the ring-shaped member, while pressing the outer circumferential surface thereof against the circumferential surface of the ring-shaped member, and
the second imaginary straight line extends from the central axis of the ring-shaped member in a direction that is shifted by 90 degrees from the first imaginary straight line in a direction opposite to a rotation direction of the ring-shaped member.

15. The processing device for a ring-shaped member according to any one of claims 1 to 14, wherein the support mechanism further includes a radially outer support member that comes into contact with the outer circumferential surface of the ring-shaped member to support the ring-shaped member in a radial direction thereof.

16. The processing device for a ring-shaped member according to any one of claims 1 to 15, wherein the support mechanism includes only the radially inner support member among the radially inner support member and the radially outer support member, the radially outer support member being configured to come into contact with the outer circumferential surface of the ring-shaped member to support the ring-shaped member in the radial direction.

17. A processing method for a ring-shaped member comprising:
a step of rotating a metal ring-shaped member in a circumferential direction around a reference axis;
a step of pressing a grinding stone against an outer circumferential surface of the ring-shaped member, the step including a step of bringing a support portion into contact with an inner circumferential surface of the ring-shaped member in at least one circumferential range around the reference axis to support the ring-shaped member.

18. A method for manufacturing a bearing including a ring-shaped member, comprising a step of processing the outer circumferential surface of the ring-shaped member using the processing method for a ring-shaped member according to claim 17.

19. The method for manufacturing a bearing according to claim 18, wherein the bearing includes an inner ring as the ring-shaped member.

20. The method for manufacturing a bearing according to claim 18, wherein the bearing includes an outer ring as the ring-shaped member.

21. A manufacturing method for a mechanical device comprising:
a step of manufacturing a mechanical component using the manufacturing method according to claim 18, and
a step of attaching the mechanical component to a device body.

22. A method for manufacturing a vehicle comprising:
a step of manufacturing a bearing using the manufacturing method according to claim 18, and
a step of attaching the bearing to a vehicle body.
